# FASCICULE DE BREVET EUROPEEN

(11) **EP 1 590 813 B1**
(45) Date de publication et mention de la délivrance du brevet: **21.04.2010**
(21) Numéro de dépôt: 03815418.3
(22) Date de dépôt: 17.12.2003
(51) Int. Cl.: G21F 5/005, B23K 10/02

(54) **Procédé d'élaboration d'un conteneur fermé et ledit conteneur fermé**
Verfahren zur herstellung eines geschlossenen Behälters und hergestellter geschlossener Behälter dafür.
Method for making a closed contained and said closed container.

(30) Priorité: 20.12.2002 FR 0216295
(43) Date de publication de la demande: 02.11.2005
(73) Titulaire: Areva NC, 75009 Paris (FR)
(72) Inventeur: LE COCQ, Serge, F-78180 Montigny le Bretonneux (FR); HENAULT, Christophe, 78910 Orgerus (FR); GATT, Pierre-Yves, F-07210 Saint Symphorien sous Chomerac (FR)
(74) Mandataire: Le Roux, Martine
(86) Numéro de dépôt international: PCT/FR2003/003762
(87) Numéro de publication internationale: WO 2004/066312

(56) Documents cités:
- EP-A- 0 774 761
- GB-A- 664 410
- US-A- 3 890 482
- US-A- 5 346 096

## Description

La présente invention a pour objets l'élaboration d'un conteneur fermé selon le préambule de la revendication 1, et ledit conteneur fermé selon la revendication 10, la présente invention a plus précisément pour objets :
- un procédé d'élaboration d'un conteneur fermé, dont la fermeture est étanche et résistante mécaniquement, par solidarisation de deux éléments métalliques du type :
   a) corps de forme essentiellement cylindrique ou prismatique, présentant un fond, une(des) paroi(s) axiale(s) et ouvert en son extrémité axiale supérieure,
   b) couvercle, de forme plus ou moins complexe, présentant une(des) paroi(s), destinée(s) à être disposée(s), en l'extrémité axiale supérieure dudit corps, en regard de la(des) paroi(s) axiale(s) dudit corps, dans le prolongement de celle(s)-ci ; procédé mis en oeuvre dans des conditions particulières, difficiles ;
- ledit conteneur fermé, dont la fermeture est étanche et résistante mécaniquement, dont la structure comprend, solidarisés l'un à l'autre, les deux éléments métalliques identifiés ci-dessus (corps, couvercle) ;
- les éléments constitutifs dudit conteneur, considérés indépendamment et conjointement, avant leur solidarisation :
   a) ledit corps ;
   b) ledit couvercle ; la structure interne de l'un desdits deux éléments comportant un guide d'accostage ; ainsi que
   c) ledit guide d'accostage, *per se,* lorsqu'il intervient à titre de pièce rapportée.

La présente invention a été développée dans le contexte du conditionnement et du stockage de déchets nucléaires. Elle n'est toutefois nullement limitée audit contexte

Le brevet US 5,346,096 décrit des conteneurs qui ne sont pas des conteneurs du type de ceux de la présente invention (corps + couvercle), qui ne sont pas obtenus par solidarisation (soudage) au sens de l'invention (voir ci-après) d'un couvercle à un corps. Le conteneur selon US 5,346,096 comprend un corps en fonte. Sur ledit corps en fonte, il est soudé, par alumino-thermie, un anneau en acier. Deux pièces complémentaires, constitutives d'un couvercle, sont agencées à l'intérieur de cet anneau. Le soudage, anneau sur corps, est un soudage de fabrication qui ne fait pas suite à un accostage direct...

La présente invention s'inscrit plus généralement dans le contexte du conditionnement, vraisemblablement en vue, du stockage, de déchets dangereux, manipulés à distance. Le corps d'un conteneur, chargé en lesdits déchets dangereux (par exemple du type déchets nucléaires compactés en galettes), ouvert en son extrémité axiale supérieure (et pas seulement en un orifice de petit diamètre) est à obturer avec un couvercle. L'obturation en cause doit être étanche (du fait de la dangerosité desdits déchets) et résistante mécaniquement (on souhaite, par la suite, manipuler le conteneur chargé fermé par son couvercle). Elle doit également pouvoir être mise en oeuvre en milieu hostile (nucléaire, notamment), de façon automatique, avec pilotage à distance.

Dans le contexte du conditionnement de déchets nucléaires en vrac au sein de conteneurs, lesdits déchets étant liés par un liant du type verre ou ciment, on obture les orifices de remplissage desdits conteneurs (orifices de petit diamètre) en disposant et soudant une tôle sur ceux-ci. Le diamètre desdits orifices de remplissage n'est pas conséquent et une résistance mécanique importante de la soudure en cause n'est pas nécessairement requise alors que l'étanchéité de ladite soudure est une caractéristique indispensable. La technique d'obturation mise en oeuvre dans ce contexte (cahier des charges moins sévère) n'était pas directement transposable dans le contexte de l'invention (où le cahier des charges est particulièrement sévère). On vise à obturer une surface conséquente et la fermeture en cause doit être résistante mécaniquement.

Dans ledit contexte de l'invention, il a tout d'abord été envisagé la mise en oeuvre d'un procédé de fermeture mécanique classique, avec intervention conjointe de pièces du type bride, boulons, joints. Un tel procédé implique beaucoup de manipulations et il se pose inéluctablement le problème de vieillissement du(des) joint(s) en cause.

Il a alors été conçu le procédé de l'invention, qui, de façon caractéristique, comprend deux étapes : une première étape d'accostage des deux éléments métalliques à souder et une seconde étape de soudure, mise en oeuvre dans des conditions particulières.

Selon son premier objet, la présente invention concerne donc un procédé d'élaboration d'un conteneur fermé, dont la fermeture est étanche et résistante mécaniquement, par solidarisation de deux éléments métalliques du type :
a) corps de forme essentiellement cylindrique ou prismatique, présentant un fond, une(des) paroi(s) axiale(s) et ouvert en son extrémité axiale supérieure ;
b) couvercle, de forme plus ou moins complexe, présentant une(des) paroi(s), destinée(s) à être disposée(s), en l'extrémité axiale supérieure dudit corps, en regard de la(des) paroi(s) axiale(s) dudit corps, dans le prolongement de celle(s)-ci.

Le corps en cause, avantageusement de forme essentiellement cylindrique, est généralement chargé. On vise à conditionner son chargement dans le conteneur fermé. Le couvercle intervient avec sa(ses) paroi(s) axiale(s) dans le prolongement de celle(s) dudit corps.

De façon caractéristique, le procédé d'élaboration du conteneur fermé de l'invention est mis en oeuvre en milieu hostile, de façon automatique, avec pilotage à distance (du fait de la dangerosité du chargement en cause) et il comprend les deux étapes successives ci-après :
- un accostage desdits deux éléments métalliques, de sorte que les extrémités de leurs parois disposées en regard soient maintenues en contact ;
- la réalisation d'une soudure, continue, pénétrée, sur tout le pourtour desdits deux éléments métalliques, au niveau de leurs extrémités de parois maintenues en contact.

Lors de la première desdites étapes, lesdits deux éléments métalliques à solidariser (corps et couvercle) sont approchés puis mis en contact, bord à bord, de manière stable.

Lors de la seconde desdites étapes, on réalise une soudure au niveau des extrémités en contact desdits deux éléments métalliques (corps et couvercle). Cette soudure est d'un type particulier. Elle est mise en oeuvre sur des surfaces, maintenues en contact, sans chevauchement. Elle est continue, de sorte que l'étanchéité requise est obtenue. Elle est pénétrée, c'est-à-dire mise en oeuvre sur toute l'épaisseur des parois en cause, de sorte que la résistance mécanique requise est obtenue.

Ces deux étapes successives du procédé de l'invention sont susceptibles d'être mises en oeuvre à un même poste ou à des postes différents.

Ainsi, selon une variante, on dispose d'un conteneur chargé qui est amené à un unique poste. Au niveau de cet unique poste, ledit conteneur chargé est coiffé d'un couvercle adéquat et la soudure est réalisée ;
selon une autre variante, ledit conteneur chargé est coiffé dudit couvercle à un premier poste et la soudure est réalisée à un deuxième poste. Cette autre variante est illustrée plus avant dans le présent texte, dans un contexte particulier.

L'approche des deux éléments à souder, lors de la première étape d'accostage, est avantageusement une approche guidée qui fait intervenir un guide d'accostage, agencé dans la structure interne de l'un ou l'autre desdits deux éléments à souder. On n'exclut pas, du cadre du procédé de l'invention, qu'une telle approche guidée fasse intervenir des moyens externes à la structure desdits deux éléments métalliques en cause (corps et couvercle). Ceci implique toutefois une mise en oeuvre plus complexe.

Pour la mise en oeuvre du soudage, on s'exonère avantageusement de toute opération de pointage. On préconise de maintenir au contact les extrémités des parois de l'un et l'autre des éléments à solidariser, en exerçant un effort sur l'un desdits éléments, l'autre étant évidemment maintenu immobile. On opère, avantageusement, en exerçant un tel effort sur le couvercle, le corps étant parfaitement bloqué.

Le soudage peut être mis en oeuvre avec ou sans métal d'apport. L'intervention d'un métal d'apport rend a priori la mise en oeuvre d'un soudage plus facile mais, en fait, la complique dans le contexte particulier de l'invention, du fait des contraintes d'exploitation (milieu hostile, pilotage à distance, ...)

Ainsi, selon une variante avantageuse, le soudage mis en oeuvre lors de la seconde étape du procédé de l'invention, l'est sans métal d'apport.

Le soudage mis en oeuvre, avec ou sans métal d'apport, avantageusement sans métal d'apport (voir ci-dessus), peut l'être selon diverses techniques, familières à l'homme du métier, et notamment selon la technique laser, ou la technique à arc électrique avec électrode réfractaire (plasma ou "TIG" (tungstene inert gas)).

On préconise tout particulièrement la mise en oeuvre du soudage par le procédé plasma, à jet débouchant, avec protection envers du bain de fusion et limitation de la surpression interne. Le principe du soudage plasma à jet débouchant (appelé aussi "keyhole") est familier à l'homme du métier. Dans le cadre de la présente invention, on met avantageusement en oeuvre une telle technique de soudage, et ce, avec protection envers du bain de fusion (généralement par inertage à l'argon ; afin d'éviter toute oxydation) et contrôle de la surpression générée au sein du conteneur (du fait de l'introduction du jet de plasma, dans ledit conteneur).

Cette technique de soudage est, de façon tout particulièrement préférée, mise en oeuvre sur un conteneur comportant dans sa structure interne un guide d'accostage ; ledit guide d'accostage intervenant, outre pour l'accostage des deux éléments à souder, également lors dudit soudage. Ledit guide d'accostage intervient, lors dudit soudage, pour réceptionner et guider le jet débouchant. Dans le cadre de cette variante tout particulièrement préférée, le jet débouchant débouche dans une gorge, équipée d'au moins une cheminée de dégazage, usinée dans ledit guide d'accostage agencé dans la structure interne du corps ou du couvercle du conteneur. Le gaz évacué de ladite gorge via la(les)dite(s) cheminée(s) de dégazage ne s'accumule pas dans le conteneur. En effet, il est prévu dans la structure dudit conteneur, au niveau du corps et/ou du couvercle dudit conteneur, avantageusement au niveau du couvercle, au moins un évent de dégazage. Cet évent de dégazage est susceptible d'être obturé à l'issue de la réalisation de la soudure.

Dans le cadre de cette variante particulièrement préférée du procédé de l'invention, on met donc successivement en oeuvre:
- l'étape d'accostage,
- l'étape de soudage ; avec intervention du guide d'accostage lors de ces deux étapes , et
- une troisième étape d'obturation totale du conteneur obtenu par soudage de son corps et de son couvercle ; troisième étape d'obturation de l'(des) évent(s) de dégazage utile(s) lors de la mise en oeuvre de ladite étape de soudage.

Le soudage, mis en oeuvre selon une quelconque technique de soudage et tout particulièrement selon le procédé plasma à jet débouchant, l'est avantageusement selon l'une et/ou l'autre des variantes ci-après :
- selon un axe de soudage horizontal, sur le conteneur (corps + couvercle) vertical ; et/ou
- avec le conteneur fixe et une tête de soudage mise en rotation autour dudit conteneur, au niveau des extrémités des parois, du corps et du couvercle dudit conteneur, maintenues en contact.

Le procédé de l'invention, tel que décrit ci-dessus en termes généraux et ci-après en référence aux figures annexées, est avantageusement mis en oeuvre pour élaborer un conteneur fermé, de conditionnement et de stockage confinés de déchets dangereux, notamment de déchets nucléaires (plus particulièrement de déchets nucléaires préalablement compactés en galettes).

Selon son deuxième objet, la présente invention concerne les conteneurs susceptibles d'être obtenus à l'issue de la mise en oeuvre du procédé, premier objet de ladite invention, exposé ci-dessus. Lesdits conteneurs ont leur structure qui porte la signature dudit procédé. De tels conteneurs sont fermés, la fermeture en cause étant étanche et résistante mécaniquement. Leur structure comprend, solidarisés l'un à l'autre, les deux éléments métalliques du type, déjà précisé ci-dessus :
a) corps de forme essentiellement cylindrique ou prismatique, présentant un fond, une(des) paroi(s) axiale(s) et ouvert en son extrémité axiale supérieure ;
b) couvercle, de forme plus ou moins complexe, présentant une(des) paroi(s), destinée(s) à être disposée(s), en l'extrémité axiale supérieure dudit corps, en regard de la(des) paroi(s) axiale(s) dudit corps, dans le prolongement de celle(s)-ci.

Le corps desdits conteneurs est avantageusement de forme essentiellement cylindrique. Il est généralement chargé en les éléments conditionnés dans ledit conteneur.

De façon caractéristique :
- la solidarisation, corps/couvercle, est de type soudure, bord à bord, avantageusement sans métal d'apport ;
- la structure interne desdits conteneurs comporte, au niveau du cordon de soudure (du plan de jonction desdits corps/couvercle) un guide d'accostage qui présente :
   + au niveau dudit cordon de soudure, côtés parois, une gorge équipée d'au moins une cheminée de dégazage,
   + au-dessus ou en dessous, avantageusement au-dessus, dudit cordon de soudure, côté parois, une extrémité chanfreinée ;
- le corps ou/et le couvercle, avantageusement le couvercle, desdits conteneurs, comporte(nt) au moins un évent de dégazage obturé.

On conçoit parfaitement, après avoir considéré la description ci-dessus du procédé, les caractéristiques ci-dessus des conteneurs. Leur structure externe comporte la soudure corps/couverde ainsi qu'au moins un évent de dégazage obturé ; leur structure interne comporte, au niveau de ladite soudure, le guide d'accostage. Il est agencé à un niveau convenable de sorte que sa gorge est au regard du cordon de soudure (elle a du être apte à réceptionner le jet de plasma, lors de la mise en oeuvre d'un soudage plasma) ; et
de sorte que son extrémité chanfreinée ait participée à l'accostage.
Il est agencé dans la structure interne du couvercle ou du corps du conteneur. En fait, le guide d'accostage intervient, généralement :
- soit, usiné dans la masse du corps ou du couvercle dudit conteneur, avantageusement usiné dans la masse dudit corps dudit conteneur ;
- soit, à titre de pièce rapportée, soudée ponctuellement audit corps ou audit couvercle.

On se propose maintenant d'illustrer l'invention, sous ses aspects procédé et "produits", dans un contexte particulier, en référence aux figures annexées ; ce, de manière nullement limitative, tant en référence audit contexte qu'auxdites figures.

Figures 1A, 1B, 1C schématisent des étapes d'un procédé de conditionnement de déchets nucléaires, procédé de conditionnement qui inclut l'élaboration d'un conteneur fermé selon invention.

Figure 2 montre, en coupe, un tel conteneur fermé de l'invention, avant obturation de l'évent de dégazage agencé sur son couvercle.

Figure 2A montre un agrandissement de la zone de soudure corps/couvercle dudit conteneur de la figure 2, zone de soudure où, de façon caractéristique, intervient le guide d'accostage.

Figures 2B et 2C montrent de la même façon des variantes de réalisation d'un tel guide d'accostage.

Figure 3 illustre, en perspective, un guide d'accostage de l'invention, destiné à intervenir en tant que pièce rapportée.

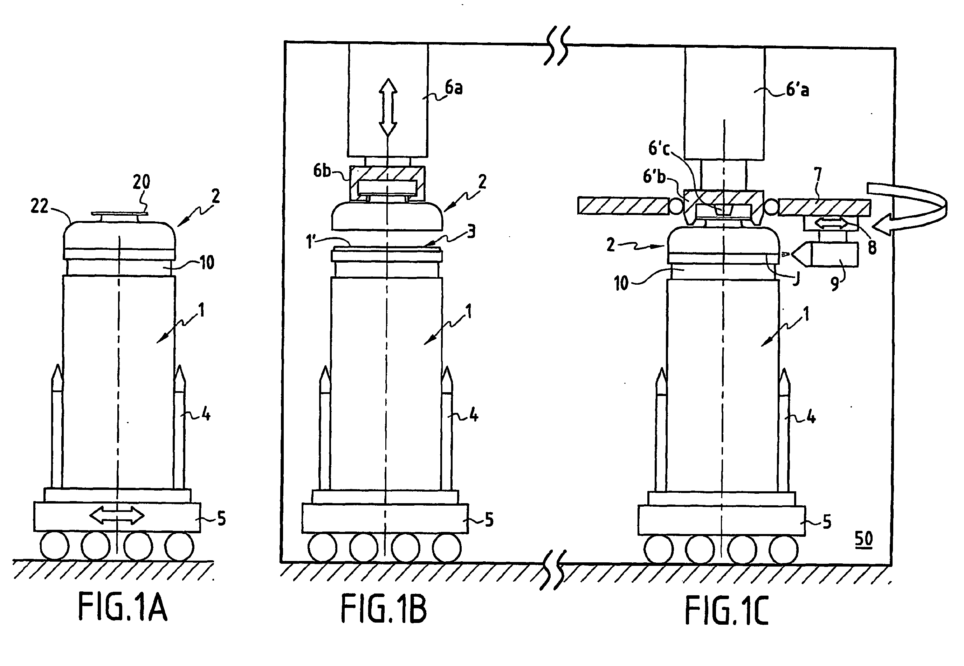

Sur la figure 1A, on montre un conteneur 1+2 vide, constitué d'un corps cylindrique 1, ouvert en son extrémité axiale supérieure 1' (visible sur la figure 1B), et d'un couvercle 2, obturant ladite extrémité axiale supérieure 1'. Ledit conteneur 1+2 est disposé sur un chariot de transfert 5, apte à être translaté. Il est stabilisé, sur ledit chariot 5, grâce aux avaloirs 4.

Le corps 1 du conteneur 1+2 présente en sa partie supérieure un épaulement 10. Une bride de préhension, utile à la manipulation dudit corps 1, est ainsi constituée.

Le couvercle 2 du conteneur 1+2 a la forme d'un dôme 22 et présente, en sa partie supérieure, une tête de dôme 20. De la même façon, ladite tête de dôme 20 constitue un moyen de préhension pour la manipulation dudit couvercle 2. Sur ce couvercle 2, plus précisément sur sa tête de dôme 20, on trouve un évent de dégazage, non représenté (question d'échelle).

Ledit couvercle 2 a été positionné et est stabilisé temporairement sur le corps 1 grâce au guide d'accostage 3 (visible sur la figure 1B), agencé en la partie supérieure interne dudit corps 1, au niveau de son extrémité axiale supérieure 1' (visible sur la figure 1B).

Le conteneur ainsi pré-constitué, fermé provisoirement de manière non étanche, est destiné à être introduit dans une cellule active 50 (figures 1B et 1C), à y être rempli de déchets nucléaires et obturé par une fermeture étanche et résistante mécaniquement.

Sur la figure 1B, on a montré l'étape de dépose (d'escamotage) du couvercle 2, qui rend accessible l'intérieur du corps 1 du conteneur 1+2. Cette dépose du couvercle 2 fait intervenir des moyens de préhension 6b dudit couvercle 2, commandés par une potence 6a, apte à monter et à descendre.

Lesdits moyens de préhension 6b dudit couvercle 2 le maintiennent tandis que le corps 1 est translaté à un poste de remplissage (non représenté). Une fois rempli, le corps 1 revient sous la potence 6a et il est à nouveau coiffé du couvercle 2. Le guide d'accostage 3 intervient encore ici pour l'accostage des deux éléments corps chargé/couvercle (en d'autres termes pour le guidage, la pose dudit couvercle 2 sur ledit corps 1, chargé) ainsi que pour la stabilisation, au contact dudit corps 1, dudit couvercle 2. L'accostage est ainsi mis en oeuvre sans pointage.

Le conteneur chargé, fermé provisoirement de manière non étanche, est alors translaté au poste de soudage. Audit poste de soudage - figure 1C - il intervient une autre potence 6'a, équipée de la machine à souder avec son dispositif de centrage 6'b sur la tête de dôme 20 du couvercle 2.

Le soudage s'opère en position corniche. Le conteneur 1+2 est fixe et c'est la tête de soudage 9 (torche plasma) qui tourne autour du joint à souder J (zone de contact corps 1/couvercle 2). Pour un positionnement correct des éléments à souder 1/2 (placés bord à bord, sans écartement ni chanfrein), la potence 6'a descend de sorte que les moyens 6'b soient en appui sur la tête de dôme 20 du couvercle 2. Un système de compliance et rotule (non représenté) permet de rattraper les écarts de positionnement du conteneur 1+2 sur le chariot 5 et d'assurer un centrage précis. La force d'appui est non négligeable. Elle permet de maintenir en place, sans jeu, le couvercle 2 et ainsi de s'exonérer de tout pointage avant soudage.

Pour s'affranchir des écarts variables de distance, joint à souder J/électrode, la tête de soudage 9 est montée sur une glissière 8 motorisée pilotée automatiquement par la régulation de tension d'arc AVC (Arc Voltage Control) ; glissière 8 elle-même montée sous un plateau orbital 7.

Une fois la soudure réalisée, en au moins une passe de la torche 9, on utilise les moyens 6'c (torche TIG, par exemple) pour obturer l'évent de dégazage prévu (non représenté) sur la tête de dôme 20 du couvercle 2. La présence d'au moins un tel évent est indispensable pour limiter toute surpression interne dans le conteneur 1+2 lors du soudage.

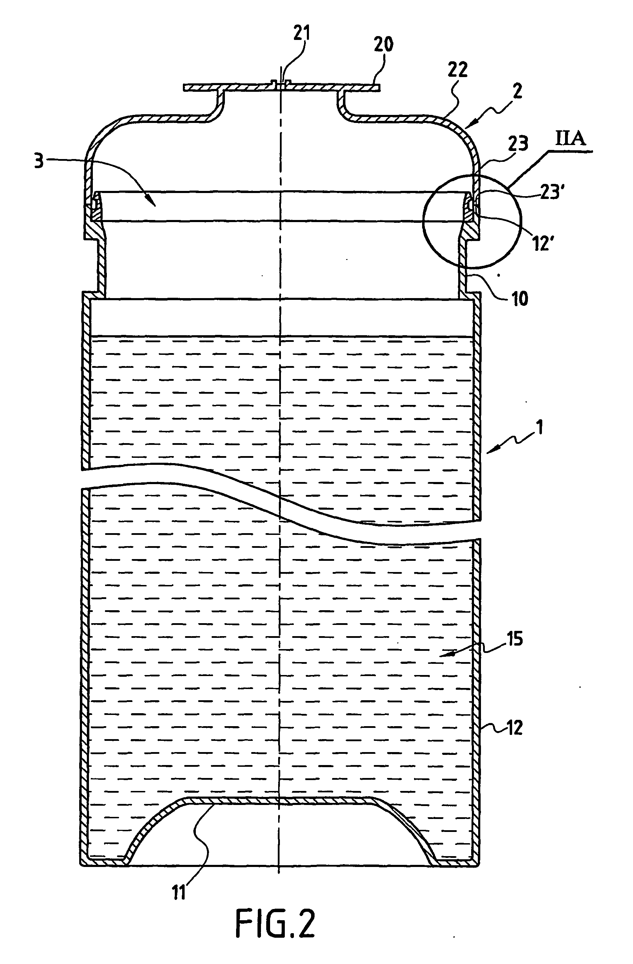

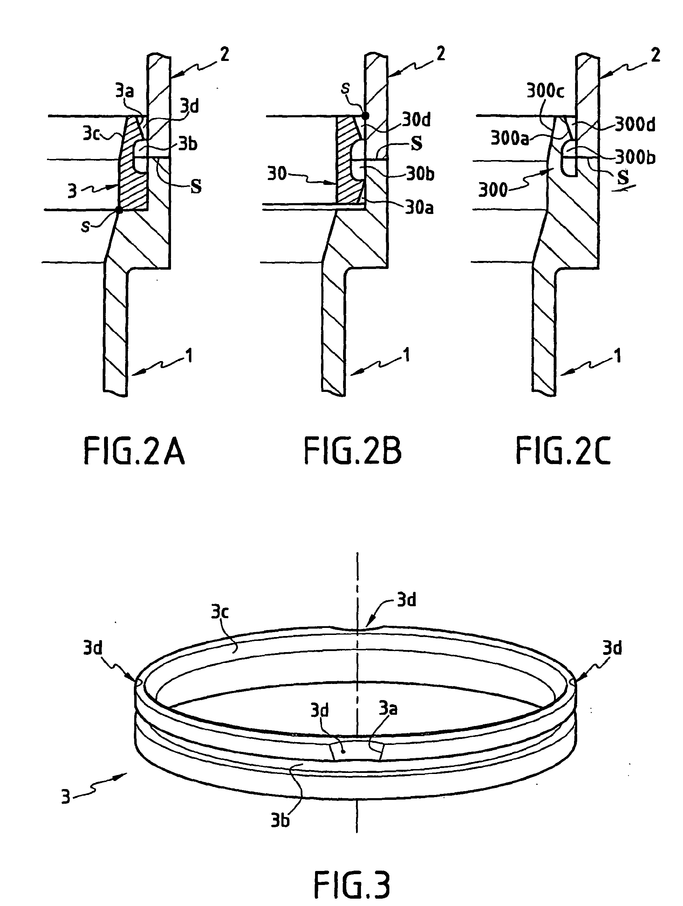

L'accostage couvercle 2/corps 1 a pu être mis en oeuvre sans pointage, grâce au guide (à l'anneau) d'accostage 3. Ledit guide 3 a permis par ailleurs la réalisation d'une soudure, continue, pénétrée, sur toute la circonférence des éléments accostés 2/1. La présence d'une gorge (voir les figures 2, 2A, 2B, 2C et 3 suivantes) dans la structure dudit guide 3 a en effet assuré, d'une part, la protection envers de la soudure et, d'autre part, le débouché du jet de plasma.

Le conteneur chargé, obtenu à l'issue de la mise en oeuvre du soudage, est ainsi fermé, obturé, de manière étanche. La fermeture en cause est par ailleurs résistante mécaniquement. Ledit conteneur, chargé, fermé, est susceptible d'être manipulé via la tête de dôme 20 de son couvercle 2.

Sur la figure 2, on retrouve un conteneur 1+2 de l'invention, chargé, fermé, avant obturation de l'évent de dégazage 21, agencé dans la tête de dôme 20 de son couvercle 2. Ledit évent de dégazage 21 est susceptible d'être bouché par soudage, selon le procédé TIG mentionné ci-dessus, sans métal d'apport. Il est en effet prévu, au niveau de la structure dudit évent 21, une réserve de matière suffisante.

Sur ladite figure 2, on retrouve, référencé :
- en 1, le corps du conteneur 1+2. Ledit corps 1 est essentiellement cylindrique. Il présente un fond 11, une paroi axiale 12. Ladite paroi axiale 12 présente elle, en sa partie supérieure, un épaulement 10 et, au-delà dudit épaulement 10, son extrémité supérieure 12'. La soudure a été mise en oeuvre au niveau de cette extrémité supérieure 12' ;
- en 2, le couvercle du conteneur 1+2. Ledit couvercle comprend un dôme 22 surmonté d'une tête de dôme 20. En 23', on a l'extrémité inférieure dudit dôme 22, (plus précisément l'extrémité inférieure de la paroi verticale 23 dudit dôme 22) soudée à l'extrémité 12' de la paroi axiale 12 du corps 1 ; en 21, l'évent de dégazage, non encore obturé ;
- en 15, les déchets conditionnés dans le conteneur 1+2 ;
- en 3, le guide d'accostage, élément essentiel à la mise en oeuvre du centrage et du positionnement du couvercle 2 sur le corps 1 puis du soudage couvercle 2/corps 1.

On se propose maintenant de décrire plus en détail ledit guide d'accostage 3, en référence à la figure 2A. Sur ladite figure 2A, on voit très nettement que la soudure réalisée **S** est une soudure, bord à bord (extrémité 12' de la paroi 12 du corps 1/extrémité 23' de la paroi verticale 23 du dôme 22 du couvercle 2), sans métal d'apport. Le guide d'accostage 3, en cause sur les figures 1B, 2 et 2A, est une pièce rapportée (telle que représentée en perspective sur la figure 3), soudée ponctuellement en s à la structure interne de la partie supérieure de la paroi axiale 12 du corps 1. Elle est soudée dans un sens et à un niveau adéquat, de sorte que :
- son extrémité supérieure chanfreinée 3a se trouve, côté parois, au-delà du plan de soudure **S** et a donc contribué au guidage et positionnement du couvercle 2 lors de son accostage sur le corps 1 ;
- sa gorge 3b se trouve, côté parois, au niveau du plan de soudure **S** et a donc, lors de la mise en oeuvre du soudage, reçu le jet plasma traversant et assuré la protection envers de la soudure. Ladite gorge 3b est équipée d'au moins une cheminée de dégazage 3d. Elle est en fait équipée de quatre telles cheminées de dégazage 3d (voir la figure 3). La surpression générée dans ladite gorge 3 lors de la mise en oeuvre du soudage est évacuée successivement via lesdites cheminées de dégazage 3d et l'évent de dégazage 21 (figure 2).

Le guide d'accostage 3 a également son extrémité supérieure chanfreinée 3c, côté intérieur du conteneur. On prévoit avantageusement à ce niveau l'intervention d'un couvercle interne qui optimise le confinement des déchets 15 dans le conteneur 1+2.

Le guide d'accostage 3 a par ailleurs fait écran lors de la mise en oeuvre du soudage. Il a protégé les déchets 15, notamment de la température développée par le jet de plasma.

Sur la figure 2B, le guide d'accostage 30 est du même type, pièce rapportée, mais ladite pièce rapportée a été solidarisée par soudure, s, non pas au corps 1 du conteneur 1+2 mais à son couvercle 2. Ledit guide d'accostage 30 a :
- son extrémité inférieure chanfreinée 30a, côté parois, en deçà du plan de soudure **S.** Cette extrémité est parfaitement dimensionnée pour être en mesure d'exercer son action de guidage et de positionnement du couvercle 2, avant mise en oeuvre du soudage ;
- sa gorge 30b, côté parois, au niveau du plan de soudure **S,** équipée d'au moins une cheminée de dégazage 30d.

Ledit guide d'accostage 30 n'est pas prévu pour réceptionner un couvercle intermédiaire.

Sur la figure 2C, le guide d'accostage 300 n'est pas une pièce rapportée. Il est usiné dans la masse du corps 1. Il présente une forme tout à fait similaire à celle du guide 3 (de la figure 2A). On retrouve en :
- 300a, son extrémité supérieure chanfreinée utile à l'accostage couvercle 2/corps 1,
- 300b, sa gorge utile au soudage,
- 300d, une cheminée de dégazage,
- 300c, son extrémité supérieure chanfreinée, côté intérieur, utile à la réception et la stabilisation d'un couvercle interne.

Comme précisé plus haut, la figure 3 montre en perspective l'anneau (guide) d'accostage 3 des figures 1B, 2 et 2A.

## Revendications

1. Procédé d'élaboration d'un conteneur fermé, dont la fermeture est étanche et résistante mécaniquement, par solidarisation de deux éléments métalliques du type :
a) corps (1) de forme essentiellement cylindrique ou prismatique, présentant un fond (11), une(des) paroi(s) axiale(s) (12) et ouvert en son extrémité axiale supérieure (1'),
b) couvercle (2), de forme plus ou moins complexe, présentant une(des) paroi(s) (23), destinée(s) à être disposée(s), en l'extrémité axiale supérieure (1') dudit corps (1), en regard de la(des) paroi(s) axiale(s) (12) dudit corps (1), dans le prolongement de celle(s)-ci (12),
**caractérisé en ce qu'**il comprend, mises en oeuvre en milieu hostile (50), de façon automatique, avec pilotage à distance, les deux étapes successives ci-après :
- un accostage desdits deux éléments métalliques (1,2), de sorte que les extrémités (12', 23') de leurs parois (12, 23) disposées en regard soient maintenues en contact ;
- la réalisation d'une soudure (**S**)**,** continue, pénétrée, sur tout le pourtour desdits deux éléments métalliques (1,2), au niveau de leurs extrémités (12', 23') de parois (12, 23) maintenues en contact.

2. Procédé selon la revendication 1, **caractérisé en ce que** ladite première étape d'accostage inclut une approche guidée desdits deux éléments (1,2) ; un guide d'accostage (3 ; 30 ; 300) étant agencé dans la structure interne de l'un desdits deux éléments (1 ou 2).

3. Procédé selon l'une des revendications 1 ou 2, **caractérisé en ce que** ladite soudure (**S**) est réalisée sans pointage, les extrémités (12', 23') des parois (12, 23) de l'un et l'autre desdits éléments (1,2) à solidariser étant maintenues en contact par exercice d'un effort sur l'un et/ou l'autre desdits éléments (1 et/ou 2), avantageusement sur le couvercle (2).

4. Procédé selon l'une quelconque des revendications 1 à 3,
**caractérisé en ce que** ladite soudure (**S**) est réalisée sans métal d'apport.

5. Procédé selon l'une quelconque des revendications 1 à 4, **caractérisé en ce que** ladite soudure (**S**) est réalisée par le procédé plasma, à jet débouchant, avec protection envers du bain de fusion et limitation de la surpression interne du conteneur élaboré.

6. Procédé selon les revendications 2 et 5, **caractérisé en ce que** ledit jet débouchant débouche dans une gorge (3b ; 30b ; 300b) équipée d'au moins une cheminée de dégazage (3d ; 30d ; 300d), usinée dans ledit guide d'accostage (3 ; 30 ; 300) agencé dans la structure interne dudit corps (1) ou dudit couvercle (2) ; ledit corps (1) et/ou ledit couvercle (2), avantageusement ledit couvercle (2), étant par ailleurs équipé d'au moins un évent de dégazage (21), susceptible d'être obturé à l'issue de la réalisation de ladite soudure (**S**).

7. Procédé selon l'une quelconque des revendications 1 à 6, **caractérisé en ce que** ladite soudure (**S**) est réalisée en position conteneur (1+2) vertical, axe de soudage horizontal.

8. Procédé selon la revendication 7, **caractérisé en ce que** ladite soudure (**S**) est réalisée avec le conteneur (1+2) fixe et une tête de soudage (9) mise en rotation autour dudit conteneur (1+2), au niveau des extrémités (12', 23') de parois (12, 23) maintenues en contact.

9. Procédé selon l'une quelconque des revendications 1 à 8, **caractérisé en ce qu'**il est mis en oeuvre pour élaborer un conteneur fermé, de conditionnement et de stockage confinés de déchets dangereux, notamment de déchets nucléaires.

10. Conteneur fermé, à fermeture étanche et résistante mécaniquement, dont la structure comprend, solidarisés l'un à l'autre, deux éléments métalliques du type
a) corps (1) de forme essentiellement cylindrique ou prismatique, présentant un fond (11), une(des) paroi(s) axiale(s) (12) et ouvert en son extrémité axiale supérieure (1') ;
b) couvercle (2), de forme plus ou moins complexe, présentant une(des) paroi(s) (23), destinée(s) à être disposée(s), en l'extrémité axiale supérieure (1') dudit corps (1), en regard de la(des) paroi(s) axiale(s) (12) dudit corps (1), dans le prolongement de celle(s)-ci ;
**caractérisé en ce que** :
ladite solidarisation est de type soudure (**S**), bord à bord, avantageusement sans métal d'apport ;
sa structure interne, au niveau du cordon de soudure (**S**), comporte un guide d'accostage (3 ; 30 ; 300) qui présente :
au niveau du cordon de soudure (**S**), côté parois (12,23), une gorge (3b ; 30b ; 300b), équipée d'au moins une cheminée de dégazage (3d ; 30d ; 300d), et
au-dessus ou en dessous, avantageusement au-dessus, dudit cordon de soudure (**S**), côté parois (12, 23), une extrémité chanfreinée (3a ; 30a ; 300 a) ;
son corps (1) ou(et) son couvercle (2), avantageusement son couvercle (2), comporte(nt) au moins un évent de dégazage (21) obturé.

11. Conteneur selon la revendication 10, **caractérisé en ce que** ledit guide d'accostage (300) est usiné dans la masse du corps (1) ou du couvercle (2), avantageusement usiné dans la masse du corps (1) ou consiste en une pièce rapportée (3 ; 30), soudée ponctuellement audit corps (1) ou couvercle (2).

## Claims

1. A method of producing a closed container with a tight and mechanically strong seal by fastening two metal elements of the following type:
a) a body (1) with an essentially cylindrical or prismatic shape having a base (11), one or more axial walls (12) and an open top axial end (1'); and
b) a cover (2) the shape of which may be more or less complex, having one or more walls (23) to be positioned at the top axial end (1') of said body (1) facing the axial wall(s) (12) of said body (1) in the extension thereof;
**characterized in that** it comprises the following two steps in succession, carried out in a hostile environment (50) in an automated manner, under remote control:
- docking said two metal elements (1, 2) so that the ends (12', 23') of their facing walls (12, 23) are maintained in contact;
- producing a continuous penetrative weld (**S**) over the entire periphery of said two metal elements (1, 2) at the ends (12', 23') of their walls (12, 23) which are maintained in contact.

2. The method according to claim 1, **characterized in that** said first docking step comprises a guided of said two elements (1, 2), a docking guide (3; 30; 300) being arranged in the internal structure of one of said two elements (1or 2).

3. The method according to claim 1 or claim 2, **characterized in that** said weld (**S**) is produced without spot welding, the ends (12', 23') of the walls (12, 23) of one or the other of said elements (1, 2) to be fastened being maintained in contact by exerting a force on one or the other of said elements (1 and/or 2), advantageously on the cover (2).

4. The method according to any one of claims 1 to 3, **characterized in that** said weld (**S**) is produced without a filler metal.

5. The method according to any one of claims 1 to 4, **characterized in that** said weld (**S**) is produced by open jet plasma process with melt-bath back cover and limiting the internal overpressure in the container produced.

6. The method according to claims 2 and 5, **characterized in that** said open jet opens intro a groove (3b; 30b; 300b) provided with at least one degassing chimney (3d; 30d; 300d) and machined in said docking guide (3; 30; 300) arranged in the internal structure of said body (1) or said cover (2); said body (1) and/or said cover (2), advantageously said cover (2), also being equipped with at least one degassing vent (21) which can be blanked off once said weld (**S**) has been produced.

7. The method according to any one of claims 1 to 6, **characterized in that** said weld (**S**) is produced with the container (1+2) in the vertical position, with the weld axis horizontal.

8. The method according to claim 7, **characterized in that** said weld (**S**) is produced with the container (1+2) being fixed and with a welding head (9) which is rotated around said container (1+2) at the level of the ends (12', 23') of the walls (12, 23) maintained in contact.

9. The method according to any one of claims 1 to 8, **characterized in that** it is carried out to produce a closed container for confined packaging and storage of hazardous waste, in particular nuclear waste.

10. A closed container with a tight and mechanically strong seal the structure of which comprises two metal elements of the following type fastened one with the other:
a) a body (1) with an essentially cylindrical or prismatic shape having a base (11), one or more axial walls (12) and an open top axial end (1'); and
b) a cover (2) with a more or less complex shape, having one or more walls (23) to be positioned at the top axial end (1') of said body (1) facing the axial wall(s) (12) of said body (1) in the extension thereof;
**characterized in that**:
the fastening is of the butt weld (**S**) type, advantageously with no filler metal;
its internal structure at the weld line (**S**) includes a docking guide (3; 30; 300) which has:
at the weld line (**S**), on the wall (12, 23) side, a groove (3b; 30b; 300b) provided with at least one degassing chimney (3d; 30d; 300d);
a chamfered end (3a; 30a; 300a) above or below, preferably above said weld line (**S**), on the wall (12, 23) side;
its body (1) and/or its cover (2), advantageously its cover (2), include(s) at least one blanked off degassing vent (21).

11. The container according to claim 10, **characterized in that** said docking guide (300) is machined in the bulk of the body (1) or the cover (2), advantageously machined in the bulk of the body (1), or consists of an insert (3; 30) spot welded to said body (1) or to said cover (2).

## Patentansprüche

1. Verfahren zur Herstellung eines geschlossenen Behälters mit dichtem und mechanisch festem Verschluß durch festes Verbinden von zwei Metallelementen vom Typ:
a) Körper (1) mit im wesentlichen zylindrischer oder prismatischer Form, der einen Boden (11), eine axiale Wand (Wände) (12) aufweist und an seinem axialen oberen Ende (1') offen ist,
b) Deckel (2) mit mehr oder weniger komplexer Form, der eine Wand (Wände) (23) aufweist, die dazu bestimmt ist (sind), am axialen oberen Ende (1') des Körpers (1) gegenüber der (den) axialen Wand (Wänden) (12) des Körpers (1) in deren (12) Verlängerung angeordnet zu werden,
**dadurch gekennzeichnet, daß** es die beiden folgenden in feindlicher Umgebung (50) automatisch und ferngesteuert durchgeführten aufeinanderfolgenden Schritte umfaßt:
- ein Anlegen der beiden Metallelemente (1, 2) derart, daß die Enden (12', 23') ihrer einander gegenüber angeordneten Wände (12, 23) in Kontakt gehalten werden,
- das Herstellen einer durchgehenden, durchdrungenen Schweißnaht (S) über den gesamten Umfang der beiden Metallelemente (1, 2) im Bereich ihrer in Kontakt gehaltenen Enden (12', 23') der Wände (12, 23).

2. Verfahren nach Anspruch 1, **dadurch gekennzeichnet, daß** der erste Schritt des Anlegens ein geführtes Annähern der beiden Elemente (1, 2) einschließt, wobei eine Anlegführung (3; 30; 300) in der Innenstruktur von einem der beiden Elemente (1 oder 2) angeordnet ist.

3. Verfahren nach einem der Ansprüche 1 oder 2, **dadurch gekennzeichnet, daß** die Schweißnaht (S) ohne Heften hergestellt wird, wobei die Enden (12', 23') der Wände (12,23) des einen und anderen der fest zu verbindenden Elemente (1,2) **dadurch** in Kontakt gehalten werden, daß auf das eine und/oder das andere der Elemente (1 und/oder 2), vorteilhafterweise auf den Deckel (2), eine Kraft ausgeübt wird.

4. Verfahren nach einem der Ansprüche 1 bis 3, **dadurch gekennzeichnet, daß** die Schweißnaht (S) ohne Zusatzmetall durchgeführt wird.

5. Verfahren nach einem der Ansprüche 1 bis 4, **dadurch gekennzeichnet, daß** die Schweißnaht (S) mittels Plasma-Stichloch-Verfahren, mit Wurzelschutz des Schmelzbades und Begrenzung des Innenüberdrucks des ausgebildeten Behälters hergestellt wird.

6. Verfahren nach den Ansprüchen 2 und 5, **dadurch gekennzeichnet, daß** das Stichloch in eine mit wenigstens einer Gasabzugsöffnung (3d; 30d; 300d) versehene Auskehlung (3b; 30b; 300b) mündet, die in die in der Innenstruktur des Körpers (1) oder des Deckels (2) angeordnete Anlegführung (3; 30; 300) eingearbeitet ist, wobei der Körper (1) und/oder der Deckel (2), vorteilhafterweise der Deckel (2) außerdem mit wenigstens einem Gasabzug (21) versehen ist, welcher geeignet ist, nach Herstellung der Schweißnaht (S) verschlossen zu werden.

7. Verfahren nach einem der Ansprüche 1 bis 6, **dadurch gekennzeichnet, daß** die Schweißnaht (S) in der Position Behälter (1+2) vertikal, Schweißnahtachse horizontal hergestellt wird.

8. Verfahren nach Anspruch 7, **dadurch gekennzeichnet, daß** die Schweißnaht (S) hergestellt wird während der Behälter (1+2) fest ist und ein Schweißkopf (9) um den Behälter (1+2) herum, im Bereich der in Kontakt gehaltenen Enden (12', 23') der Wände (12, 23) in Rotation versetzt wird.

9. Verfahren nach der Ansprüche 1 bis 8, **dadurch gekennzeichnet, daß** es durchgeführt wird, um einen geschlossenen Behälter zum eingeschlossenen Verpacken und Lagern gefährlicher Abfälle, insbesondere von radioaktiven Abfällen herzustellen.

10. Geschlossener Behälter mit dichtem und mechanisch festem Verschluß, dessen Struktur zwei fest miteinander verbundene Metallelemente folgenden Typs umfaßt:
a) Körper (1) mit im wesentlichen zylindrischer oder prismatischer Form, der einen Bonden (11), eine axiale Wand (Wände) (12) aufweist und an seinem axialen oberen Ende (1') offen ist,
b) Deckel (2) mit mehr oder weniger komplexer Form, der eine Wand (Wände) (23) aufweist, die dazu bestimmt ist (sind), am axialen oberen Ende (1') des Körpers (1) gegenüber der (den) axialen Wand (Wänden) (12) des Körpers (1) in deren Verlängerung angeordnet zu werden,
**dadurch gekennzeichnet, daß**:
das feste Verbinden von der Art Stumpfnahtschweißung (S), vorteilhafterweise ohne Zusatzmetall ist,
seine Innenstruktur im Bereich der Schweißnaht (S) eine Anlegführung (3; 30; 300) umfaßt, die folgendes aufweist:
im Bereich der Schweißnaht (S), wandseitig (12, 23), eine Auskehlung (3b; 30b; 300b), die mit wenigstens einer Gasabzugsöffnung (3d; 30d; 300d) versehen ist, und
oberhalb oder unterhalb, vorzugsweise oberhalb der Schweißnaht (S), wandseitig (12, 23), ein gefastes Ende (3a; 30a; 300a);
sein Körper (1) oder (und) sein Deckel (2), vorteilhafterweise sein Deckel (2) wenigstens einen verschlossenen Gasabzug (21) aufweist (aufweisen).

11. Behälter nach Anspruch 10, **dadurch gekennzeichnet, daß** die Anlegführung (300) in die Masse des Körpers (1) oder des Deckels (2), vorteilhafterweise in die Masse des Körpers (1) gearbeitet ist oder aus einem angesetzten Teil (3; 30) besteht, das an den Körper (1) oder an den Deckel (2) punktuell angeschweißt ist.
